# EUROPÄISCHE PATENTSCHRIFT

(11) **EP 4 650 816 B1**
(45) Veröffentlichungstag und Bekanntmachung des Hinweises auf die Patenterteilung: **16.09.2026**
(21) Anmeldenummer: 25161650.4
(22) Anmeldetag: 04.03.2025
(51) Int. Cl.: G01S 7/03, G01S 7/40, G01S 13/08, G01S 13/76, G01S 13/931, G01S 7/41, G01S 13/88, G05D 1/633, G05D 1/247, G05D 107/70, G05D 109/10, G05D 111/30

(54) **VERFAHREN ZUR ANPASSUNG VON WIEDERHOLUNGSRATEN VON UWB-BASIERTEN ABSTANDSMESSUNGEN, ABSTANDSMESSEINRICHTUNG FÜR EIN FLURFÖRDERZEUG, FLURFÖRDERZEUG, STEUERUNGS-SOFTWAREPROGRAMM UND ABSTANDSMESSSYSTEM**
METHOD FOR ADAPTING REPETITION RATES OF UWB-BASED DISTANCE MEASUREMENTS, DISTANCE MEASURING DEVICE FOR INDUSTRIAL TRUCK, INDUSTRIAL TRUCK, CONTROL SOFTWARE PROGRAM AND DISTANCE MEASURING SYSTEM
PROCÉDÉ D'ADAPTATION DE TAUX DE RÉPÉTITION DE MESURES DE DISTANCE BASÉES SUR UWB, DISPOSITIF DE MESURE DE DISTANCE POUR UN CHARIOT DE MANUTENTION, CHARIOT DE MANUTENTION, PROGRAMME DE COMMANDE ET SYSTÈME DE MESURE DE DISTANCE

(30) Priorität: 13.05.2024 DE 102024113264
(43) Veröffentlichungstag der Anmeldung: 19.11.2025
(73) Patentinhaber: Jungheinrich AG, 22047 Hamburg (DE)
(72) Erfinder: ALTMANN, Tony, 24616 Brokstedt (DE); HEISE, Sven-Ole, 24783 Osterrönfeld (DE); AHRENS, Stefan, 25373 Ellerhoop (DE)
(74) Vertreter: Seemann & Partner Patentanwälte mbB

(56) Entgegenhaltungen:
- DE-A1- 102014 203 723
- DE-A1- 102017 111 367
- DE-A1- 4 433 957
- US-A1- 2023 185 307
- ZAMORA-CADENAS LETICIA ET AL: "UWB-Based Safety System for Autonomous Guided Vehicles Without Hardware on the Infrastructure", IEEE ACCESS, IEEE, USA, vol. 9, 2 July 2021 (2021-07-02), pages 96430 - 96443, XP011866273, DOI: 10.1109/ACCESS.2021.3094279

## Beschreibung

Die Erfindung betrifft ein Verfahren zur Anpassung von Wiederholungsraten von UWB-basierten Abstandsmessungen einer Abstandsmesseinrichtung eines ersten Flurförderzeugs zu Abstandsmesseinrichtungen eines oder mehrerer weiterer Objekte, insbesondere weiterer Flurförderzeuge, wobei zwischen dem ersten Flurförderzeug einerseits und dem weiteren Objekt bzw. den weiteren Objekten andererseits jeweils UWB-basierte Abstandsmessungen mit jeweils variablen Wiederholungsraten durchgeführt werden. Die Erfindung betrifft weiter eine Abstandsmesseinrichtung für ein Flurförderzeug, ein Steuerungs-Softwareprogramm und ein Abstandsmesssystem.

Im Stand der Technik ist bekannt, dass Flurförderzeuge in Logistikeinrichtungen, wie zum Beispiel Warenlagern oder Regallagern für Güter und Waren, mit möglichst hoher Geschwindigkeit bewegt werden, um die Güter und Waren schnell und effizient von bzw. zu ihren Lagerstellen zu transportieren. In der Regel werden hierbei verschiedene Flurförderzeuge eingesetzt, die von einem Fahrer oder automatisch, zum Beispiel durch Verwendung von Induktionsschleifen oder dergleichen, geführt werden. Zunehmend sind Flurförderzeuge auch selbstfahrend eingerichtet. Dies bedeutet, dass sie von einem Zentralrechner auf drahtlosem Wege ihre nächsten Stationen übermittelt bekommen, gegebenenfalls angereichert mit Routeninformationen, und ihren Weg zum nächsten Ziel selbstständig finden.

Um die Flurförderzeuge zu führen, werden auch Fahrerassistenzsysteme auf oder in den Flurförderzeugen eingesetzt, wodurch das Flurförderzeug beeinflusst wird oder der Fahrer informiert wird, wenn beispielsweise in einem gefährdeten Bereich langsamer gefahren werden soll oder auf bestimmten Flächen oder in bestimmten Bereichen keine Ware abgelegt werden soll. Derartige Einschränkungen in der Führung der Flurförderzeuge sind jeweils lokal und gegebenenfalls auch zeitlich begrenzt und betreffen dementsprechend nur einzelne Zonen innerhalb einer Warenlogistikeinrichtung.

Da Lagerlogistik in steigendem Maß auf der Automatisierung von Lagervorgängen beruht, einschließlich der Verwendung selbstfahrender Flurförderzeuge, ist auch die Kollisionsvermeidung mit anderen bewegten Objekten wichtig. Dies gilt ebenso für Flurförderzeuge, die von einem Fahrer gefahren werden.

Um solche Objekte zu lokalisieren, werden Flurförderzeuge mit Abstandsmesssystemen ausgestattet, die auf Ultra-Breitband-(UWB)-Funkübertragungen zwischen Flurförderzeugen untereinander oder Flurförderzeugen und anderen Objekten beruhen, die mit entsprechenden Einheiten ausgestattet sind. Solche Einheiten bzw. Systeme, die UWB-Signale senden und empfangen, werden im Folgenden kurz als "UWB-Vorrichtungen" bezeichnet. Diese können passiv oder aktiv sein, wobei passive UWB-Vorrichtungen keine Abstandsmessungen initiieren, während aktive UWB-Vorrichtungen Abstandsmessungen initiieren und beantworten können. Autonom fahrende und personenbetriebene Flurförderzeuge benötigen aktive UWB-Vorrichtungen. Flurförderzeuge oder Objekte, die mit solchen UWB-Vorrichtungen ausgestattet sind, werden im Rahmen der vorliegenden Offenbarung als "UWB-fähig" bezeichnet.

Eine häufig verwendete Form der Abstandsmessung ist das sogenannte Two-Way-Ranging (TWR). Dabei handelt es sich um eine Zweiwege-Abstandsmessung, die auf wiederholten Laufzeitmessungen von UWB-Signalen zwischen zwei Objekten basiert, die von einem der beiden Objekte initiiert werden und vom anderen Objekt empfangen und zurückgesendet werden. Ein weiteres im Rahmen der vorliegenden Offenbarung einsetzbares UWB-basiertes Abstandsmessverfahren ist das Time-Difference-on-Arrival-(TDoA)-Verfahren. TWR oder TDoA können außerdem durch das Angle-of-Arrival-(AoA)-Verfahren komplettiert werden, das zusätzlich eine Richtungsortung ermöglicht.

Mit TWR und den anderen UWB-basierten Abstandsmessverfahren lässt sich die Lokalisierung von bewegten Objekten in Lagern dezentral einrichten, wobei idealerweise alle beweglichen Objekte, also Flurförderzeuge, Personen oder andere bewegliche Gegenstände, die mit UWB-Sendern und -Empfängern ausgestattet sind, an der Abstandsmessung teilnehmen. Weiterhin kann es stationäre Ankerpunkte im Lager geben, beispielsweise drei oder mehr Ankerpunkte, die eine Triangulation und daher eine absolute Positionsbestimmung der Flurförderzeuge im Lager erlauben. Diese dienen der Disposition der Flurförderzeuge für ihre Logistikaufgaben, während die UWB-Messungen zwischen den Flurförderzeugen und den anderen beweglichen Objekten für deren autonome Steuerung verwendet werden.

Die Dezentralität dieses Lokalisierungsverfahrens stellt das System allerdings vor das Problem, dass es nicht beliebig skalierbar ist, weil sehr viel Funkverkehr in einem relativ kleinen Raumbereich auftritt, falls sich dort viele Fahrzeuge aufhalten. Diese Vielzahl an Messungen kann sich gegenseitig überlagern, was zu Störungen bei der Lokalisierung führen kann. In solchen Fällen kann es notwendig sein, die Anzahl der Verkehrsteilnehmer zu begrenzen oder gar ein anderes System zu verwenden.

Einige Rahmenparameter sind durch die Anwendung in der Lagerlogistik bereits angelegt. So beträgt die Reichweite von UWB-Funkübertragungen von UWB-Vorrichtung ca. 40 bis 60 m. Die Geschwindigkeit von Flurförderzeugen in Regallagern oder Warenlagern beträgt auf freien Abschnitten beispielsweise ca. 12 bis 14 km/h, in Bereichen mit weniger Bewegungsfreiheit teilweise beispielsweise 6 bis 8 km/h. Bei größeren Lagern, bei denen die Dimensionen so groß sind, dass sie die Reichweite der Funkübertragungen übersteigen, kann es daher notwendig sein, zusätzlich zu den UWB-Messsignalen auch noch Signale auszusenden, mit denen Objekte identifiziert werden, die zuvor noch nicht im Sendeabstand waren, um mit den identifizierten Objekten anschließend individuelle UWB-Messsignale auszutauschen.

Ein Richtwert für UWB-Messungen bei UWB-Messfrequenzen ist, dass eine maximale Luftauslastung von 18% eingehalten wird, da ansonsten die Fehlerrate durch überlappende und einander interferierende Messsignale zu hoch wird. Die Luftauslastung bezeichnet den Anteil der Zeit, der mit Messsignalen belegt ist.

Um dieses Problem, dass die maximale Luftauslastung erreicht und überschritten wird, zu reduzieren, ist es bekannt, die Wiederholungsrate der Messung, auch Messrate oder Blinkrate genannt, zu reduzieren, wenn die Eigenbewegung des messenden Flurförderzeugs gering ist, wodurch unter anderem berücksichtigt wird, dass ein langsameres Objekt weniger Schaden verursacht als ein schnelleres Objekt und im Notfall schneller zum Stehen gebracht werden kann. Ebenfalls ist es bekannt, die Messrate zu reduzieren, falls die detektierten Objekte einen großen Abstand aufweisen. Hierdurch wird der Funkverkehr insgesamt reduziert. Derzeit betriebene Systeme sind daher auf relativ wenige Flurförderzeuge begrenzt. Bei einer Wiederholungsrate von 500 ms lassen sich derzeit auf diese Weise ca. zehn Fahrzeuge in das System einbinden. Es ist gewünscht, mehr Fahrzeuge einbinden zu können und das System weiterhin robust zu halten.

Ein weiterer Grund dafür, dass Abstandsmessungen fehlschlagen können, liegt darin, dass in Lagern, insbesondere Regallagern, eine direkte Sichtlinie zwischen verschiedenen beweglichen Objekten häufig durch metallische, abschirmende Strukturen der Regalkonstruktionen oder durch darauf gelagerte Gegenstände blockiert ist und daher nicht jede Messung zum Erfolg führt. Außerdem kann es sein, dass, in selteneren Fällen, das Signal an einer Wand reflektiert wird und aufgrund des verlängerten Weges mit einer größeren Laufzeitverzögerung ankommt, die dazu führt, dass der tatsächliche Abstand zum Objekt überschätzt wird.

Aus DE 10 2014 203 723 A1 ist ein Verfahren zum Betrieb einer Flotte von mobilen Plattformen, z.B. Flurförderzeugen, bekannt, bei dem den mobilen Plattformen zeitversetzte Zeitschlitze für eine Laufzeitbasierte Abstands- und/oder Positionsmessung zugewiesen werden, um gegenseitige Störung der Messungen zu vermeiden.

DE 44 33 957 A1 offenbart ein Verfahren zur Ultraschall-Hinderniserkennung für fahrerlose Fahrzeuge, die sich in Gassen eines automatisierten Lagerhaltungssystems bewegen. Um das Problem der Unterscheidung hindernisbedingter Ultraschallechos von ultraschallfrequenten Störsignalen zu lösen, wird vorgeschlagen, in aufeinanderfolgenden Messzyklen jeweils einen Ultraschallimpuls abzustrahlen und anschließend Ultraschallwellen zu erfassen und auszuwerten, und bei der Auswertung in den aufeinanderfolgenden Messzyklen gemessenen Echogrammen miteinander in Beziehung zu setzen, so dass Amplituden, die sich auch in vorangegangenen Echogrammen finden, verstärkt werden und solche, die nur sporadisch auftreten, abgeschwächt werden.

Gemäß DE 10 2017 111 367 A1 umfasst ein Abstandsmesssystem einen Sender für ein frequenzveränderliches Abtastsignal, einen Empfänger und eine Auswerteeinheit. Diese berechnet einen Abstand zu einem reflektierenden Objekt anhand einer Differenz zwischen den Frequenzen des emittierten und des empfangenen Abtastsignals. Eine redundante Messung erfolgt, indem die Messung mit zwei verschiedenen Änderungsraten der Frequenz des Abtastsignals erfolgt und miteinander verglichen wird.

Aus US 2023/185307 A1 ist eine kamerabasierte Vorrichtung und ein kamerabasiertes Verfahren zum Planen eines Pfades eines Roboters bekannt. Die Kamera wird verwendet, Bilder in Bewegungsrichtung des Roboters aufzunehmen. In den Bildern werden sich bewegende Hindernisse erkannt und deren Bewegung analysiert und mit einer Ellipse markiert, welche daraufhin überprüft wird, ob der geplante Pfad des Roboters diese schneidet.

Schließlich wird in L. Zamora-Cadenas et al., "UWB-Based Safety System for AGV Without Hardware on the Infrastructure", IEEE Access, Vol. 9, 2021, S. 96430 - 96443, eine Studie über autonom fahrende Flurförderzeuge vorgestellt, bei der die Flurförderzeuge mit UWB-Sensoren ausgestattet wurden, die in der Lage waren, Tags an Personen oder mobilen Gegenständen zu erkennen, ohne dass stationäre Instrumentation notwendig ist.

Demgegenüber liegt der vorliegenden Erfindung die Aufgabe zugrunde, eine Lagerlogistik auch bei einer großen Anzahl von teilnehmenden beweglichen Objekten sicher und robust zu gestalten.

Diese Aufgabe wird durch ein Verfahren zur Anpassung von Wiederholungsraten von UWB-basierten Abstandsmessungen einer Abstandsmesseinrichtung eines ersten Flurförderzeugs zu Abstandsmesseinrichtungen eines oder mehrerer weiterer UWB-fähiger Objekte, insbesondere weiterer Flurförderzeuge, wobei zwischen dem ersten Flurförderzeug einerseits und dem weiteren Objekt bzw. den weiteren Objekten andererseits jeweils UWB-basierte Abstandsmessungen mit jeweils variablen Wiederholungsraten durchgeführt werden, gelöst, das dadurch weitergebildet ist, dass Ergebnisse der wiederholten Abstandsmessungen einem prädiktiven Analysealgorithmus zugeführt werden, welcher auf der Grundlage der wiederholten Abstandsmessungen Schätzungen eines oder mehrerer Objektzustände des jeweiligen Objekts ausführt und/oder korrigiert, wobei auf der Grundlage der Schätzungen der Objektzustände anhand von vordefinierten Systemparametern die jeweilige Wiederholungsrate für die Abstandsmessungen für jedes der einen oder mehreren weiteren Objekte individuell angepasst wird.

Der Einsatz eines prädiktiven Analysealgorithmus berücksichtigt die Erkenntnis, dass die sicherheitsrelevanten Abstandsmessungen im Logistik-Umfeld teilweise fehlerbehaftet sind und es ein Risiko darstellen kann, Entscheidungen über Bewegungen eines automatischen Flurförderzeugs auf eine fehlerhafte Datenbasis zu stellen. Dieses Risiko steigt mit der Anzahl von Flurförderzeugen und anderen UWB-fähigen Objekten im Lager.

Dieses grundsätzliche Problem wird vorliegend dadurch angegangen, dass nicht die puren Abstandsmessungen als Grundlage für die Steuerung der Wiederholungsraten der Abstandsmessungen verwendet werden, sondern von dem prädiktiven Analysealgorithmus erzeugte und/oder korrigierte Schätzungen eines oder mehrerer Objektzustände, und dessen Ausgabewerte dann anstelle der potentiell fehlerbehafteten direkten Abstandsmesswerte für die Steuerung der individuellen Wiederholungsraten der Abstandsmessungen zu individuellen Objekten verwendet werden.

In Ausführungsformen legt der Analysealgorithmus für jedes der einen oder mehreren weiteren Objekte eine eigene Analyseinstanz an. Damit wird sichergestellt, dass jedes Objekt einzeln und unabhängig von den anderen Objekten behandelt wird.

Der prädiktive Analysealgorithmus ist in Ausführungsformen als prädiktives Filter ausgebildet. Prädiktive Filter sind grundsätzlich bekannt. Vorteilhafterweise ist das prädiktive Filter als Bayes-Filter, insbesondere als einfaches oder erweitertes Kalman-Filter, insbesondere mit einem angegliederten linearen oder linearisierten Modell mit Bewegungsgleichungen, ausgebildet.

Ein Bayes-Filter ist ein rekursives probabilistisches Verfahren zur Schätzung von Wahrscheinlichkeitsverteilungen von Zuständen eines Systems bei gegebenen Beobachtungen und Messungen. Es verwendet einerseits die einkommenden fehlerbehafteten Messungen und andererseits ein mathematisches Modell des beobachteten Prozesses. Die Messungen unterliegen aufgrund von Messfehlern einem Messrauschen, die durch eine Kovarianzmatrix **Rₖ** beschrieben wird, während das mathematische Modell die tatsächliche Dynamik möglicherweise, insbesondere aufgrund sich ändernder Bedingungen, fehlerhaft beschreibt. Dieses sogenannte Prozessrauschen wird durch eine sogenannte **Qₖ₋₁**-Matrix beschrieben.

Die fehlerbehafteten Messungen und das mathematische Modell liefern unabhängig voneinander mit Messrauschen bzw. Prozessrauschen belastete Vermutungen über den Systemzustand. Das Bayes-Filter berechnet Wahrscheinlichkeiten für die unterschiedlichen Vermutungen, um daraus eine konsolidierte Aussage über den tatsächlichen Systemzustand zu treffen, die mit höherer Wahrscheinlichkeit korrekter ist als jede der beiden Ausgangsvermutungen für sich. So aktualisiert das Bayes-Filter den wahrscheinlichsten Systemzustand auf der Grundlage der zuletzt erfassten Sensordaten kontinuierlich. Der Algorithmus ist rekursiv und besteht aus den beiden Teilen Vorhersage und Aktualisierung, das Modell wird also an den letzten ausgegebenen Systemzustand angepasst. In dem Spezialfall, dass die Variablen normalverteilt und die Übergänge linear sind, ist der Bayes-Filter ein Kalman-Filter.

In alternativen Ausführungsformen ist der prädiktive Analysealgorithmus als Modell künstlicher Intelligenz, insbesondere als neuronales Netz, ausgebildet, welches anhand verfügbarer Abstandsmessungsdaten trainiert wird oder ist. Wenn die Trainingsdaten die gleiche Bandbreite an Fehlern, Unsicherheiten, Lücken etc. aufweisen wie die realen Daten, lernt das Modell, auch in Anbetracht fehlerbehafteter Daten zu einer soliden Schätzung von Objektzuständen zu gelangen.

In einigen Ausführungsformen macht das Modell künstlicher Intelligenz eine Vorhersage einer Zeit bis zum Erreichen einer vordefinierten Distanzschwelle und passt abhängig von dieser Zeit die Wiederholungsrate an, insbesondere basierend auf vordefinierten Schwellwerten oder anderer Systemzustände. Dabei kann das Modell künstlicher Intelligenz in Ausführungsformen selbstlernend ausgebildet sein, wobei insbesondere eine tatsächliche Zeit bis zum Erreichen der vordefinierten Distanzschwelle gemessen wird und dem Modell wieder zugeführt wird.

Die Daten, die als Eingangsdaten für das Modell künstlicher Intelligenz dienen, können ein oder mehrere zurückliegende Abstandsmesswerte bis zu einem zuletzt gemessenen Abstandsmesswert sein. Dabei kann eine bestimmte Anzahl von Abstandsmesswerten berücksichtigt werden und/oder Abstandsmesswerte, die innerhalb eines bestimmten zurückliegenden Zeitraums gewonnen wurden. Die Anzahl und/oder der Zeitraum der zu berücksichtigenden Abstandsmesswerte kann an aktuelle Umstände anpassbar sein. Beispielsweise können bei höheren Unsicherheiten in der Schätzung mehr zurückliegende Abstandsmesswerte berücksichtigt werden als in Phasen mit geringeren Unsicherheiten.

Sowohl im Fall eines prädiktiven Filters als auch im Fall eines Modells künstlicher Intelligenz als prädiktiver Analysealgorithmus ist der Output ein Schätzwert für einen oder mehrere Objektzustände. Neben dem beispielhaften Fall einer Zeit bis zum Erreichen einer vordefinierten Distanzschwelle können die einen oder mehreren Objektzustände in weiteren Ausführungsformen vorzugsweise eine Distanz, eine Geschwindigkeit und/oder eine Beschleunigung umfassen. Damit sind die grundlegenden Bewegungsgleichungen entsprechend der notwendigen Komplexität darstellbar. Wenn die zugrundeliegende UWB-Messung eine reine Distanzmessung ist, sind die Distanz, Geschwindigkeit und Beschleunigung insbesondere jeweils eindimensional ausgelegt. Die Bewegungsgleichungen halten sich dementsprechend simpel. Die Distanz selbst ist eine positive Zahl. Das Vorzeichen der Geschwindigkeit besagt, ob sich ein Objekt nähert oder entfernt, das Vorzeichen der Beschleunigung wird entsprechend definiert.

Wenn zusätzlich zur reinen Abstandsmessung, beispielsweise per TWR oder TDoA, eine Richtungsmessung implementiert wird, beispielsweise mittels UWB-basierter AoA (Angle-of-Attack)-Messung, handelt es sich um eine zweidimensionale Messung in einer Ebene. In dem Fall kann eine Abstandsmessung mit einer Messung der Richtung kombiniert werden, um beispielsweise herauszufinden, ob bei einer Annäherung eine Kollisionsgefahr besteht oder nicht. So deutet beispielsweise eine starke Änderung der Richtung des anderen Objekts zu Flurförderzeug während einer Annäherung darauf hin, dass das andere Objekt nicht auf einem direkten Kollisionskurs mit dem Flurförderzeug ist, während dies wohl anzunehmen ist, wenn sich die Richtung, in der sich das Objekt relativ zum Flurförderzeug befindet, während der Annäherung nicht oder nur wenig ändert.

Den verschiedenen beweglichen UWB-fähigen Objekten wird jeweils eine Instanz eines prädiktiven Filters zugewiesen, weil die Objekte sich voneinander unabhängig bewegen. So halten die verschiedenen Filterinstanzen die notwendigen Informationen über die Annäherungen der verschiedenen zu beobachtenden Objekte bereit, und es können die Wiederholungsraten der Abstandsmessungen für jedes Objekt individuell eingestellt werden.

Insbesondere im Falle der Verwendung eines prädiktiven Filters bringen es die rekursive Berechnung der einen oder mehreren Objektzustände sowie die Verwendung eines mathematischen Modells der Bewegungsgleichungen mit sich, dass das prädiktive Filter eine gewisse Trägheit hat und auch für die unmittelbare Zukunft Vorhersagen trifft, die dann mit neuen Messdaten abgeglichen werden. Die Trägheit wirkt sich so aus, dass, beispielsweise bei einer plötzlichen Beschleunigung, die Messdaten anfangen, sich schnell von den Vorhersagen des dynamischen Modells der Bewegung zu entfernen. Das Modell wird in der nächsten Iteration oder den nächsten Iterationen an die beobachteten Messwerte angepasst, unabhängig von dem Messrauschen dieser Messwerte. Das prädiktive Filter reguliert sich auf diese Weise selbst wieder auf die Messwerte ein.

In Ausführungsformen wird die Wiederholungsrate für die Abstandsmessung pro weiterem Objekt nicht unter eine minimale Wiederholungsrate der Abstandsmessungen pro weiterem Objekt, insbesondere entsprechend einem Messabstand von 2 Sekunden, abgesenkt und/oder nicht über eine maximale Wiederholungsrate hinaus, insbesondere entsprechend einem Messabstand von 0,2 Sekunden, erhöht. Die Verwendung von Untergrenzen für die Wiederholungsrate stellt sicher, dass auch dann, wenn eine sichere Distanz zu einem Objekt gewahrt ist, es nicht zu Überraschungen kommt, die aufgrund einer zu geringen Wiederholungsrate übersehen werden. Andererseits wird durch Obergrenzen für die Wiederholungsrate sichergestellt, dass die Luftauslastung nicht durch unkontrolliertes Erhöhen der Wiederholungsrate zu stark ansteigt. Dabei ist vorzugsweise die maximale Wiederholungsrate so zu werden, dass angesichts der Beschleunigungs- und Bremseigenschaften der Flurförderzeuge Kollisionen stets sicher vermieden werden.

In Ausführungsformen wird eine geringe Wiederholungsrate eingestellt oder eine Wiederholungsrate verringert, wenn ein Objektzustand eine gleichförmige Bewegung ergibt und/oder ein Objektzustand anzeigt, dass die Distanz zu dem Objekt sich vergrößert. Hierbei handelt es sich um simple Fälle, ähnlich den beiden zuvor genannten bereits bekannten Fällen, dass das Flurförderzeug sich langsam bewegt bzw. bereits eine große Distanz zu dem anderen Objekt vorliegt. Diese bekannten Maßnahmen können selbstverständlich in allen Ausführungsformen der vorliegenden Erfindung weiterhin verwendet werden.

Bei dieser Ausführungsform wie auch den weiteren Ausführungsformen, die miteinander kombinierbar sind, wird eine hohe oder geringe Wiederholungsrate eingestellt oder eine Wiederholungsrate erhöht oder verringert. Dies kann dadurch ausgeführt werden, dass die Wiederholungsrate um, gegebenenfalls zuvor festgelegte, absolute oder prozentuale Schritte erhöht oder verringert wird, oder mit der Erhöhung oder Verringerung eine für den jeweiligen Fall voreingestellte höhere oder geringere Wiederholungsrate als zuvor eingestellt wird oder im einfachsten Fall zwischen einer vorher festgelegten hohen und einer vorher festgelegten geringen Wiederholungsrate gewechselt wird. Die Erhöhung oder Verringerung der Wiederholungsrate kann auch von mehreren Faktoren abhängen.

Im Folgenden wird eine nicht abschließende Liste von Fällen genannt, in denen eine hohe Wiederholungsrate eingestellt oder eine Wiederholungsrate erhöht wird, insbesondere eine vorbestimmte hohe Wiederholungsrate eingestellt wird. Eine vorbestimmte hohe Wiederholungsrate ist zu verstehen als eine vorbestimmte Wiederholungsrate, die höher ist als eine ebenfalls vorbestimmte niedrige Wiederholungsrate, die in unkritischen Situationen verwendet wird. Es kann sich bei der vorbestimmten hohen Wiederholungsrate auch um eine vorbestimmte maximale Wiederholungsrate handeln.

Im Sinne einer Selbstregulierung des Analysealgorithmus wird eine hohe Wiederholungsrate in einer ersten Ausführungsform eingestellt oder eine Wiederholungsrate erhöht, wenn die Messdaten sich von den Vorhersagen des Modells entfernen, insbesondere über einen bestimmten Schwellwert hinaus.

In weiteren Ausführungsformen wird eine hohe Wiederholungsrate eingestellt oder eine Wiederholungsrate erhöht, wenn ein Objektzustand eine hohe Beschleunigung ergibt, die insbesondere oberhalb eines vordefinierten oder anpassbaren Schwellwerts liegt. Dies gilt insbesondere für eine Beschleunigung, mit der die Distanz zwischen zwei Objekten zunehmend verringert wird, kann aber auch für Beschleunigungen gelten, die einen Abstand in zunehmendem Maße vergrößern, da auch dies ein Zeichen für eine unregelmäßige Bewegung sein kann, welche eine erhöhte Aufmerksamkeit erfordert.

In weiteren Ausführungsformen wird eine hohe Wiederholungsrate eingestellt oder eine Wiederholungsrate erhöht, wenn ein Objektzustand ergibt, dass ein vordefinierter Warnbereich und/oder eine vordefinierte Zonengrenze angenähert und/oder erreicht wird. Typische Warnbereiche um das Flurförderzeug herum, die auch bislang bereits überwacht werden, haben einen Radius von ca. 3 bis 4 m.

In weiteren Ausführungsformen wird eine hohe Wiederholungsrate eingestellt oder eine Wiederholungsrate der Abstandsmessung zu einem Objekt erhöht, wenn das Objekt unregelmäßig erfasst wird. Eine unregelmäßige Erfassung bedeutet, dass UWB-Messungen teilweise fehlschlagen, nicht jeder Messversuch ergibt also eine gültige Messung. Dies kann mehrere Ursachen haben. Eine Ursache ist eine Abschattung der Sichtlinie durch zwischenliegende Objekte oder Regale. Eine weitere Ursache ist eine zu hohe Luftauslastung. Diese Ursachen sind für das einzelne Flurförderzeug nicht notwendigerweise zu unterscheiden. Ob die Wiederholungsrate tatsächlich erhöht wird, kann insbesondere davon abhängig gemacht werden, wie die zuletzt bekannte Distanz zu dem Objekt ist, wobei bei ausreichend großer Distanz und/oder geringer Geschwindigkeit die Wiederholungsrate nicht erhöht wird.

Es kann in Ausführungsformen eine hohe Wiederholungsrate eingestellt oder eine Wiederholungsrate der Abstandsmessung zu einem Objekt erhöht werden, wenn ein Objektzustand eine unregelmäßige Bewegung ergibt. Unregelmäßige Bewegungen sind durch einfache dynamische Modelle nicht gut vorherzusagen, sodass die Unregelmäßigkeit der Bewegung einen Indikator für ein erhöhtes Risiko darstellt. Die Feststellung, dass die Bewegung unregelmäßig ist, kann durch Analyse eines vergangenen Verlaufs der Bewegungen erfolgen oder dadurch, dass festgestellt wird, dass aktuelle Messungen stark von den Vermutungen abweichen, die von dem Modellteil des prädiktiven Filters stammen. Dies kann einen Hinweis auf tatsächliche Unregelmäßigkeiten der Bewegungen bieten, kann aber auch ein Hinweis darauf sein, dass die Messungen selbst fehlerhaft sind, beispielsweise dadurch, dass aufeinanderfolgende Messungen über verschiedene reflexionsbehaftete Pfade zwischen den beiden UWB-fähigen Objekten verlaufen sind und daher inkorrekte Abstände ergeben. In diesem Fall ist eine Erhöhung der Wiederholungsrate auch deswegen angezeigt, dass umso schneller wieder korrekte Messwerte erzeugt werden.

In weiteren Ausführungsformen wird eine hohe Wiederholungsrate eingestellt oder eine Wiederholungsrate der Abstandsmessung zu einem Objekt erhöht, wenn eine Wahrscheinlichkeit, dass ein Objektzustand korrekt wiedergegeben wird, unter einen vordefinierten Schwellwert sinkt. Ein solcher Zustand wird erreicht, wenn sowohl das Messrauschen als auch das Prozessrauschen stark ansteigt und das prädiktive Filter nur noch eine zu geringe Wahrscheinlichkeit dafür errechnet, dass der aus der Kombination der Messleitung und der Modellvermutung hervorgegangene wahrscheinlichste Wert des Objektzustands dem tatsächlichen Objektzustand entspricht.

Vorzugsweise wird die Wiederholungsrate wieder abgesenkt, wenn die zuvor eingetretene Bedingung oder Bedingungen, die zur Erhöhung der Wiederholungsrate geführt hat oder haben, nicht mehr erfüllt ist oder sind.

Durch die genannten Maßnahmen wird die Wiederholungsrate der Abstandsmessung für jedes Objekt situationsangepasst gesteuert, so das eine hohe Messrate nur dann verwendet wird, wenn es die Situation erfordert. Hierdurch kann die durchschnittliche Messrate und damit der durchschnittliche Funkverkehr reduziert werden. Diese Maßnahmen führen somit zu einer Erhöhung der Fahrzeugkapazitäten im selben Raumbereich um ein Mehrfaches.

Die der Erfindung zugrunde liegende Aufgabe wird auch durch eine Abstandsmesseinrichtung für ein Flurförderzeug gelöst, umfassend eine UWB-Sende- und -Empfangseinheit und eine Steuereinrichtung, die eingerichtet ist, wiederholt UWB-basierte Abstandsmessungen zu anderen UWB-fähigen Objekten, insbesondere Flurförderzeugen, durchzuführen und Wiederholungsraten der Abstandsmessungen gemäß einem zuvor beschriebenen erfindungsgemäßen Verfahren anzupassen, wobei die Steuereinrichtung insbesondere in die Abstandsmesseinrichtung oder in eine Steuereinheit des Flurförderzeugs integriert ist. Ein Flurförderzeug kann mit einer solchen Abstandsmesseinrichtung ab Werk ausgestattet sein oder auch damit nachgerüstet werden.

Ferner wird die der Erfindung zugrunde liegende Aufgabe auch durch ein Flurförderzeug mit solcher erfindungsgemäßen Abstandsmesseinrichtung gelöst, ebenso wie durch ein Steuerungs-Softwareprogramm mit Programmcodemitteln, die ausgebildet sind, bei Ausführung in der Steuereinrichtung der Abstandsmesseinrichtung eines solchen Flurföderzeugs ein zuvor beschriebenes erfindungsgemäßes Verfahren auszuführen, sowie durch ein Abstandsmesssystem mit wenigstens einem ersten entsprechenden erfindungsgemäßen Flurförderzeug und einem oder mehreren UWB-fähigen weiteren Objekten.

Das Flurförderzeug, das Steuerungs-Softwareprogramm und das Abstandsmesssystem sind jeweils auf das erfindungsgemäße Verfahren zurückbezogen und teilen dessen Vorteile, Merkmale und Eigenschaften.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht eines Lagerbereichs,
- Fig. 2: eine schematische Darstellung eines Messverlaufs,
- Fig. 3: ein Weg-Zeit-Diagramm eines ersten Ausführungsbeispiels,
- Fig. 4: ein Weg-Zeit-Diagramm eines zweiten Ausführungsbeispiels,
- Fig. 5: ein Geschwindigkeits-Zeit-Diagramm eines dritten Ausführungsbeispiels,
- Fig. 6: ein Beschleunigungs-Zeit-Diagramm eines vierten Ausführungsbeispiels,
- Fig. 7: ein Weg-Zeit-Diagramm eines fünften Ausführungsbeispiels,
- Fig. 8: ein Weg-Zeit-Diagramm eines sechsten Ausführungsbeispiels,
- Fig. 9: ein Weg-Zeit-Diagramm eines siebten Ausführungsbeispiels und
- Fig. 10: eine schematisch-diagrammatische Veranschaulichung eines prädiktiven Filters.

In den Zeichnungen sind jeweils gleiche oder gleichartige Elemente und/oder Teile mit denselben Bezugsziffern versehen, so dass von einer erneuten Vorstellung jeweils abgesehen wird.

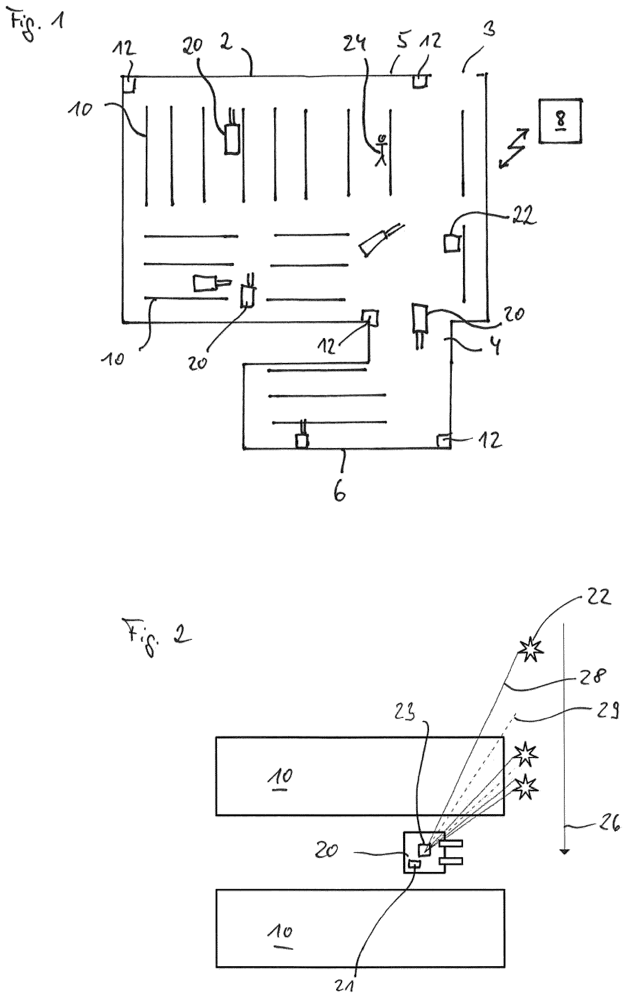

Fig. 1 zeigt eine schematische Ansicht eines Lagerbereichs 2, der über einen Eingang 3 zugänglich ist und von einer Begrenzung 5, beispielsweise einer Wand, einer Mauer, einem Zaun oder ähnlichem abgegrenzt ist. In dem Lagerbereich 2 befindet sich eine Vielzahl von Regalen 10, die rein schematisch dargestellt sind und zwischen sich Gänge offenlassen, durch die sich bewegliche Objekte wie Flurförderzeuge 20, Personen 24 oder andere bewegliche Objekte 22 bewegen können. Im gezeigten Ausführungsbeispiel hat der Lagerbereich 2 außerdem noch einen sekundären Lagerbereich 6, der über einen Durchgang 4 erreichbar ist. Auch im sekundären Lagerbereich 6 stehen weitere Regale 10.

Die Flurförderzeuge 20, das bewegliche Objekt 22 und die Person 24 sind mit Abstandsmessvorrichtungen ausgestattet, mit denen zwischen den jeweiligen Flurförderzeugen 20 bzw. Flurförderzeugen 22 und Objekt 22 oder Flurförderzeug 20 und Personen 24 individuelle UWB-basierte Abstandsmessungen erfolgen, die auf einer Laufzeitmessung beruhen und mit Identifizierungsdaten der beiden teilnehmenden UWB-Vorrichtungen ausgestattet sind, die stellvertretend auch das jeweilige Flurförderzeug 20, Objekt 22 oder Person 24 identifizieren. Da es sich um ein dezentrales System handelt, tauscht jedes Flurförderzeug 20 sich mit allen anderen Flurförderzeugen und Objekten 22 bzw. UWB-Vorrichtungen von Personen 24 aus.

Ferner sind an mehreren Stellen Ankerpunkte 12 vorhanden, die stationär sind und Abstandsmessungen mit den im Raum vorhandenen UWB-Messsystemen der Flurförderzeuge 20, Objekte 22 und Personen 24 durchführen, um deren absoluten Standort durch Triangulation zu bestimmen.

Die Verhältnisse im Lagerbereich 2 machen es teilweise schwierig, verlässliche Messwerte zu bekommen. Dies ist in Fig. 2 schematisch dargestellt. Ein Flurförderzeug 20 befindet sich in einem Gang zwischen zwei Regalen 10 und ist im Kontakt mit einem sich entlang einer Bewegungsrichtung 26 nähernden beweglichen Objekt 22. Das Flurförderzeug 20 weist eine Steuereinrichtung 21 und eine UWB-Vorrichtung 23 auf.

Eine Abstandsmessung wird entlang des hier dargestellten Bewegungsverlaufes insgesamt sechsmal initiiert und führt dreimal zum Erfolg, dargestellt durch die Sterne sowie die durchgezogenen Linien für valide Messungen 28 und die gestrichelten Linien für Fehlmessungen 29. In diesen Fällen war die Sichtlinie zwischen dem Flurförderzeug 20 und dem Objekt 22 durch Strukturen des Regals 10 oder von auf dem Regal 10 lagernden Gegenständen blockiert, sodass die Messung jeweils fehlschlägt. Bei der zweiten erfolgreichen Messung hat sich das Objekt 22 dem Flurförderzeug 20 so weit angenähert, dass die Wiederholungsrate der Abstandsmessungen gesteigert worden ist, was an der dichteren Abfolge von Messversuchen kenntlich ist.

Alternativ hätte eine Reflexion des Messsignals an einer reflektierenden Fläche auch zu einer vollendeten Messung führen können, die allerdings zu einem falschen Ergebnis geführt hätte. Die Messungen des Abstands im Umfeld des Lagerbereichs ist daher fehlerbehaftet.

Im Folgenden werden mehrere Ausführungsbeispiele von Kriterien für die Erhöhung oder Absenkung der Wiederholungsrate der Abstandsmessungen anhand jeweils eines beobachteten Objekts schematisch vorgestellt, dem eine Instanz des prädiktiven Filters zugewiesen ist.

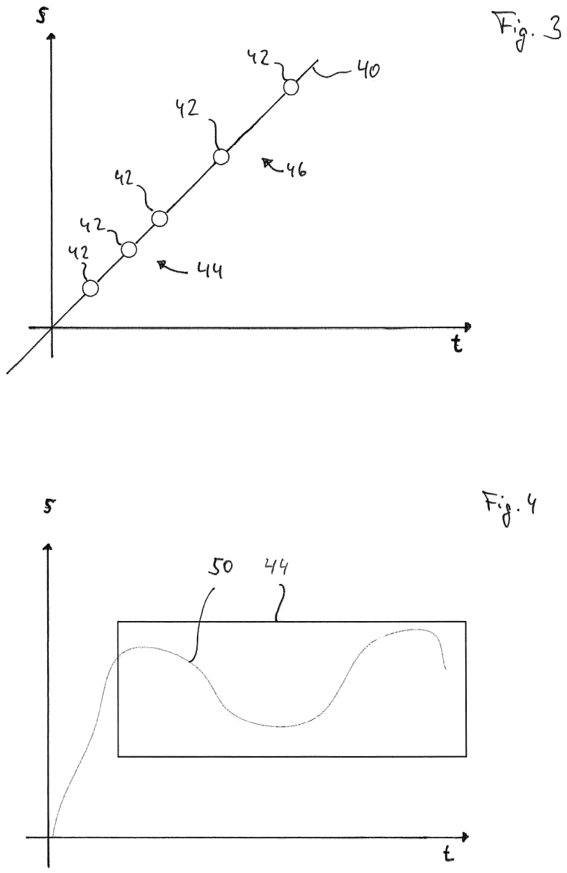

So zeigt Fig. 3 ein Weg-Zeit-Diagramm (s-t-Diagramm) eines einfachen ersten Ausführungsbeispiels, bei dem ein Objekt sich mit einer gleichförmigen Geschwindigkeit, also einer gleichförmigen Bewegung 40 von einem messenden Flurförderzeug 20 wegbewegt. Zeitpunkte und Ergebnisse von Abstandsmessungen sind als Kreise mit Bezugszeichen 42 kenntlich gemacht. Solange das Objekt 22 noch nahe ist, der Wert von s also gering ist, wird eine hohe Wiederholungsrate 44 verwendet, die durch die geringen Abstände zwischen den Messpunkten 42 erkennbar ist. Bei sich weiter vergrößerndem Abstand wird die Wiederholungsrate auf einen niedrigeren Wert 46 abgesenkt.

Da es sich um eine rein schematische Darstellung handelt, sind für den Weg und die Zeit an den Diagrammachsen keine Einheiten angegeben. Dies gilt auch für alle folgenden Diagramme der Figuren 4 bis 9.

Fig. 4 stellt ein Weg-Zeit-Diagramm (s-t-Diagramm) eines zweiten Ausführungsbeispiels mit einer unregelmäßigen Bewegung 50 dar, bei denen sich die Distanz zu dem Flurförderzeug 20 zunächst vergrößert und dann unregelmäßig verändert. In diesem Fall wird während der unregelmäßigen Phase eine hohe Wiederholungsrate 44 verwendet, da nicht vorhergesagt werden kann, ob sich das Objekt nicht wieder stark annähern wird. In dem gezeigten Diagramm erkennt die Steuerlogik die unregelmäßige Phase anhand der schwankenden Abstandswerte, die weder entscheidend größer werden, was anzeigen würde, dass ein sicherer Abstand erreicht wird, noch wieder entscheidend kleiner werden, was eine Kollisionsgefahr bedeuten würde.

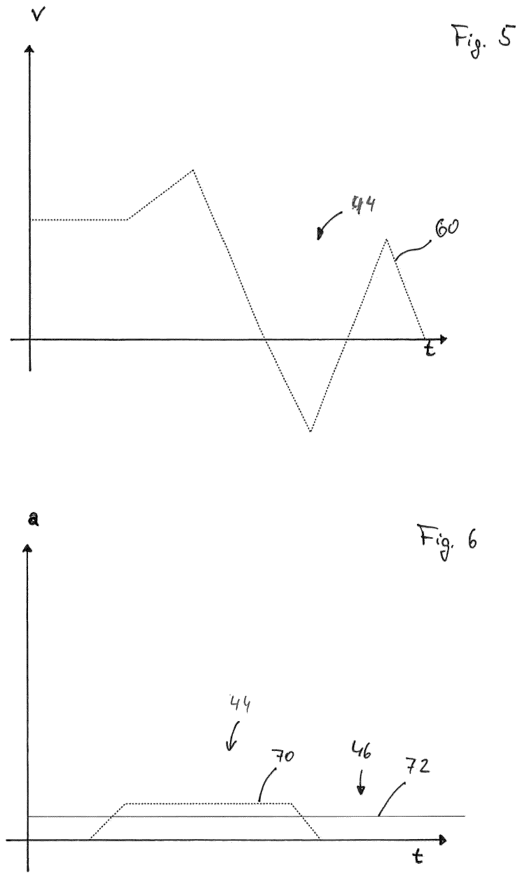

War in den Figuren 3 und 4 der beobachtete Objektzustand in erster Linie die Distanz, also der Abstand zum beobachteten Objekt, so zeigt Fig. 5 ein Geschwindigkeits-Zeit-Diagramm (v-t-Diagramm) eines dritten Ausführungsbeispiels, bei dem der beobachtete Objektzustand eine Geschwindigkeit ist, also eine Relativgeschwindigkeit bezüglich des Abstands zwischen dem beobachtenden Flurförderzeug 20 und dem beobachteten Objekt 22. Nach einer ersten Phase mit konstanter Geschwindigkeit v tritt das beobachtete Objekt in eine Phase mit unregelmäßig wechselnden Geschwindigkeiten 60 ein, die paarweise steigen, teilweise sinken und sogar negativ werden, um dann wieder positiv zu werden. In dieser Phase unregelmäßig wechselnder Geschwindigkeiten 60 wird nach der Steuerlogik eine hohe Wiederholungsrate 44 der Abstandsmessungen eingestellt. Dies kann damit einhergehen, dass beispielsweise in Phasen negativer Geschwindigkeit, also einer Annäherung, weiter erhöhte Wiederholungsraten 44 eingestellt werden. Sobald die festgestellte Geschwindigkeit wieder einen konstanten oder dauerhaft kleinen Wert annimmt, wird die Wiederholungsrate wieder abgesenkt.

Fig. 6 zeigt ein Beschleunigungs-Zeit-Diagramm (a-t-Diagramm) eines vierten Ausführungsbeispiels, bei dem der beobachtete Objektzustand eine Beschleunigung a ist. Auch die Beschleunigung a bezieht sich eindimensional auf den Abstand zwischen dem beobachtenden Flurförderzeug 20 und dem beobachteten Objekt. **In** diesem einfachen Ausführungsbeispiel der Fig. 6 wird ein Grenzwert bzw. Schwellwert 72 für die Beschleunigung gesetzt, bei deren Überschreiten eine hohe Wiederholungsrate 44 angestellt wird. Sobald die Beschleunigung wieder unter den Schwellwert 72 fällt, wird wieder eine niedrigere Wiederholungsrate 46 eingestellt.

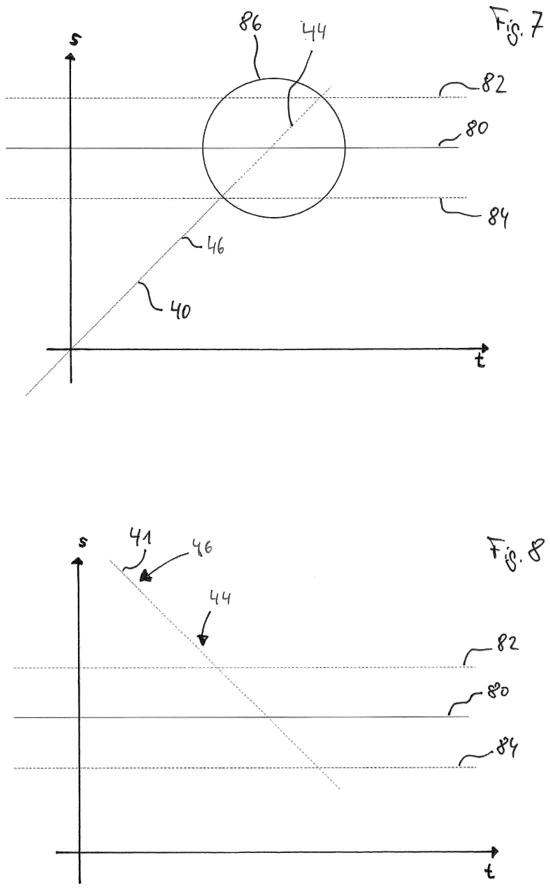

Fig. 7 stellt ein Weg-Zeit-Diagramm (s-t-Diagramm) eines fünften Ausführungsbeispiels dar, bei dem sich die Wiederholungsrate der Abstandsmessungen daran orientiert, ob und wie das beobachtete Objekt sich einem wachen Bereich rund um eine Warndistanz 80 nähert, der durch eine obere Warnbereichsgrenze 82 und eine untere Warnbereichsgrenze 84 definiert sein kann. In dem in Fig. 7 dargestellten Ausführungsbeispiel handelt es sich wiederum um eine gleichförmige Bewegung 40, die von einer großen Annäherung an das Flurförderzeug 20 mit kleinem Wert von s durch den Warnbereich hindurch zu größeren Abständen führt. Der Bereich des Durchgangs 86 durch den Warnbereich ist mit einem Kreis markiert. Bei Eintritt in den Warnbereich, d. h., sobald die untere Warnbereichsgrenze 84 überschritten ist, wird eine erhöhte Wiederholungsrate 44 verwendet. Erst nach Verlassen des Warnbereichs wird die Wiederholungsrate wieder abgesenkt (in Fig. 7 nicht dargestellt).

Fig. 8 zeigt ein Weg-Zeit-Diagramm (s-t-Diagramm) eines sechsten Ausführungsbeispiels, bei welchem wiederum eine gleichförmige Bewegung 41 beobachtet wird, die sich allerdings von außen an den Warnbereich um die Warndistanz 80 nähert. In diesem Fall wird bereits vor Erreichen der oberen Warnbereichsgrenze 82 von einer niedrigen Wiederholungsrate 46 zu einer höheren Wiederholungsrate 44 umgeschaltet, weil mit Eintritt in den Warnbereich eine Kollisionsgefahr größer wird. Wenn aufgrund des Eintritts in den Warnbereich weitere Maßnahmen in der Steuerung des Flurförderzeugs 20 ergriffen werden wie beispielsweise eine Absenkung der Eigengeschwindigkeit, mit der die Kollisionsgefahr herabgesetzt wird, kann nach dem durchqueren des Warnbereichs die Wiederholungsrate der Abstandsmessungen auch wieder abgesenkt werden, wobei sie vorzugsweise auf einem sicheren Niveau verbleibt.

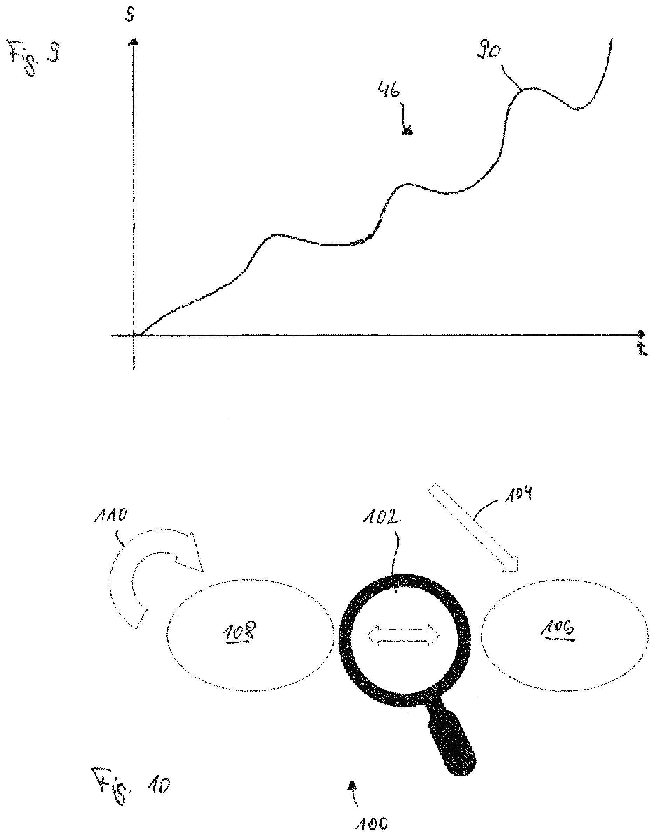

Fig. 9 zeigt ein Weg-Zeit-Diagramm (*s-t*-Diagramm) eines siebten Ausführungsbeispiels. In diesem Fall handelt es sich um eine zwar unregelmäßige Bewegung 90, die aber dennoch im Wesentlichen, mit wenigen kurzzeitigen Ausnahmen, stetig steigt. Dies bedeutet, dass das Objekt sich tendenziell vom Flurförderzeug 20 entfernt und daher keine Gefahr darstellt. Bei einem solchen Profil kann eingestellt werden, dass eine niedrige Wiederholungsrate 46 für die Distanzmessung zu diesem Objekt verwendet wird.

Die zuvor gezeigten Ausführungsbeispiele sind der Klarheit halber jeweils anhand einer einzelnen Größe dargestellt worden, nämlich Weg, Geschwindigkeit oder Beschleunigung. Wenn zwei oder alle drei dieser Größen als Objektzustände beobachtet werden, ist es selbstverständlich möglich, die hier vorgestellten Bewertungskriterien für die Einstellung niedrigerer oder höherer Wiederholungsraten für die Abstandsmessungen zu verfeinern und durch Kombination von Weg und Geschwindigkeit oder Weg, Geschwindigkeit und Beschleunigung oder auch Beschleunigung und Geschwindigkeit zu realisieren.

So kann beispielsweise eine vergleichsweise starke Unregelmäßigkeit in der Geschwindigkeit oder der Beschleunigung bei großem Abstand im Wesentlichen unbeachtet bleiben, während eine mäßige Unregelmäßigkeit der Beschleunigung und/oder der Geschwindigkeit bei kleineren Abständen zu einer Erhöhung der Wiederholungsrate führen kann. Kriterien wie Abstand, Größe und/oder Richtung der Geschwindigkeit, Größe und/oder Richtung der Beschleunigung, Unregelmäßigkeit des Abstands, Unregelmäßigkeit der Geschwindigkeit, Unregelmäßigkeit der Beschleunigung können mit mehrdimensionalen Bereichsangabe in Form von Tabellen, und/oder durch komplexere Funktionen mit mehreren Variablen umgesetzt werden.

Ebenfalls kann es vorkommen, dass das prädiktive Filter aufgrund von gleichzeitigen Steigerungen des Messrauschens und des Prozessrauschens zu unsicheren Ergebnissen für die zu beobachtenden Objektzustände gelangt. Dies kann beispielsweise in Situationen geschehen, wo die Verbindung zwischen den beiden Objekten, die an der Abstandsmessung teilnehmen, gestört ist und gleichzeitig eine große Relativgeschwindigkeit, eine große Beschleunigung oder generell unregelmäßige Relativbewegungen stattfinden, die von den in prädiktiven Filtern enthaltenen dynamischen Modelle nicht gut beschrieben werden. In einem solchen Fall kann es nützlich sein, die Wiederholungsrate der Messung für die entsprechende Filterinstanz zu erhöhen, um wieder zu einer solideren Basis für die Bestimmung des aktuellen Objektzustands zu gelangen.

Fig. 10 zeigt eine schematisch-diagrammatische Veranschaulichung eines prädiktiven Filters, beispielsweise eines Bayes-Filters 100. Im Zentrum, quasi unter der Lupe, ist ein zu beobachtender Systemzustand 102, dem eine Fehler-Kovarianzmatrix zugeordnet ist, die einen Rückschluss darauf zulässt, wie wahrscheinlich es ist, dass der vorhergesagte Systemzustand mit dem tatsächlichen Systemzustand übereinstimmt.

Der Doppelpfeil innerhalb der Lupe symbolisiert, dass der Systemzustand 102 laufend von zwei Seiten her abgeglichen und korrigiert wird. Zum einen betrifft das auf der rechten Seite eine Korrektur 106 mit Messdaten 104, die asynchron dann stattfindet, wenn die Messdaten 104 eintreffen. Hierauf hat das Filter 100 durch die Erhöhung oder Absenkung der Wiederholungsfrequenz der Abstandsmessungen einen Einfluss. Zur Linken nimmt auf die Berechnung des Systemzustands 102 eine Vorhersage 108 aus einem dynamischen Modell, welches beispielsweise lineare oder auf den jeweiligen Systemzustand hin linearisierte Bewegungsgleichungen enthält, kontinuierlich Einfluss, welches in regelmäßigen Abständen 110 anhand des zu dem Zeitpunkt geltenden vorhergesagten Systemzustands 102 aktualisiert wird. Beide Teile 106, 108 des Filters 100 werden bei der Berechnung des Systemstatus 102 und dessen Fehler-Kovarianz verwendet.

Aus dem Wechselspiel zwischen Modellvorhersage 108, dem ein Prozessrauschen innewohnt, und den Korrekturen 106 aus den Sensordaten 104, die einem Messrauschen unterliegen, wird ein wahrscheinlichster Systemzustand 102 errechnet. Dies ist möglich, da sowohl das Prozessrauschen als auch das Messrauschen quantifiziert sind. Im Ergebnis wird der vorhergesagte Systemzustand 102 einmal stärker von den Messdaten, ein andermal stärker von dem Modell beeinflusst, wobei jeweils derjenige Beitrag stärker gewichtet wird, der, bildlich gesprochen, das geringere Rauschen aufweist.

Bei plötzlichen Bewegungen, wie beispielsweise stärkeren Beschleunigungen, bei gleichzeitig guter Signalstärke, kann das Messrauschen trotz starker Änderungen gering sein, sodass das prädiktive Filter die sich stark ändernde Bewegung gut nachvollziehen kann. Eine gewisse Trägheit hat das Filter jedoch, da auch die Vorhersage des Modells, welches die Beschleunigung nicht vorhergesagt hat, mit einer gewissen Gewichtung einfließt. Das Modell wird jedoch in der nächsten Iteration bzw. den nächsten Iterationen der Aktualisierung angepasst, sodass es die beobachtete Beschleunigung nachvollzieht, sodass beide Beiträge mit einer geringen Verzögerung wieder ins Gleichgewicht kommen. Dies geschieht umso schneller, je geringer die Wiederholungsrate der Abstandsmessungen ist. Insofern ist auch bei einer stärkeren Abweichung zwischen den Messdaten und den Modellvorhersagen eine Erhöhung der Wiederholungsrate der Abstandsmessungen vorteilhaft.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Lagerbereich
- 3: Eingang
- 4: Durchgang
- 5: Begrenzung
- 6: sekundärer Lagerbereich
- 8: Logistiksteuerrechner
- 10: Regale
- 12: Ankerpunkt
- 20: Flurförderzeug
- 21: Steuereinrichtung
- 22: UWB-fähiges Objekt
- 23: UWB-Vorrichtung
- 24: Person mit UWB-Vorrichtung
- 26: Bewegungsrichtung
- 28: valide Messung
- 29: Fehlmessung
- 40, 41: gleichförmige Bewegung
- 42: Messpunkt
- 44: hohe Wiederholungsrate
- 46: niedrige Wiederholungsrate
- 50: unregelmäßige Bewegung
- 60: wechselnde Geschwindigkeit
- 70: Beschleunigung
- 72: Schwellwert
- 80: Warndistanz
- 82: obere Warnbereichsgrenze
- 84: untere Warnbereichsgrenze
- 86: Durchgang durch den Warnbereich
- 90: unregelmäßige wegstrebende Bewegung
- 100: Bayes-Filter
- 102: Systemzustand
- 104: Messdaten
- 106: asynchrone Korrektur
- 108: kontinuierliche Modellvorhersage
- 110: Wiederholung

## Patentansprüche

1. Verfahren zur Anpassung von Wiederholungsraten von UWB-basierten Abstandsmessungen einer Abstandsmesseinrichtung eines ersten Flurförderzeugs (20) zu Abstandsmesseinrichtungen eines oder mehrerer weiterer UWB-fähiger Objekte (20, 22, 24), insbesondere weiterer Flurförderzeuge (20), wobei zwischen dem ersten Flurförderzeug (20) einerseits und dem weiteren Objekt (20, 22, 24) bzw. den weiteren Objekten (20, 22, 24) andererseits jeweils UWB-basierte Abstandsmessungen mit jeweils variablen Wiederholungsraten durchgeführt werden, **dadurch gekennzeichnet, dass** Ergebnisse der wiederholten Abstandsmessungen einem prädiktiven Analysealgorithmus (100) zugeführt werden, welcher auf der Grundlage der wiederholten Abstandsmessungen Schätzungen eines oder mehrerer Objektzustände des jeweiligen Objekts (20, 22, 24) ausführt und/oder korrigiert, wobei auf der Grundlage der Schätzungen der Objektzustände anhand von vordefinierten Systemparametern die jeweilige Wiederholungsrate für die Abstandsmessungen für jedes der einen oder mehreren weiteren Objekte (20, 22, 24) individuell angepasst wird.

2. Verfahren nach Anspruch 1, **dadurch gekennzeichnet, dass** der Analysealgorithmus für jedes der einen oder mehreren weiteren Objekte (20, 22, 24) eine eigene Analyseinstanz anlegt.

3. Verfahren nach Anspruch 1 oder 2, **dadurch gekennzeichnet, dass** der prädiktive Analysealgorithmus als prädiktives Filter (100), insbesondere als Bayes-Filter, insbesondere als einfaches oder erweitertes Kalman-Filter, insbesondere mit einem angegliederten linearen oder linearisierten Modell mit Bewegungsgleichungen, ausgebildet ist.

4. Verfahren nach Anspruch 1 oder 2, **dadurch gekennzeichnet, dass** der prädiktive Analysealgorithmus als Modell künstlicher Intelligenz, insbesondere als neuronales Netz, ausgebildet ist, welches anhand verfügbarer Abstandsmessungsdaten trainiert wird oder ist.

5. Verfahren nach Anspruch 4, **dadurch gekennzeichnet, dass** das Modell künstlicher Intelligenz eine Vorhersage einer Zeit bis zum Erreichen einer vordefinierten Distanzschwelle macht und abhängig von dieser Zeit die Wiederholungsrate anpasst, insbesondere basierend auf vordefinierten Schwellwerten.

6. Verfahren nach Anspruch 4 oder 5, **dadurch gekennzeichnet, dass** das Modell künstlicher Intelligenz selbstlernend ausgebildet ist, wobei insbesondere eine tatsächliche Zeit bis zum Erreichen der vordefinierten Distanzschwelle gemessen wird und dem Modell wieder zugeführt wird.

7. Verfahren nach einem der Ansprüche 1 bis 6, **dadurch gekennzeichnet, dass** die einen oder mehreren Objektzustände eine Distanz, eine Geschwindigkeit und/oder eine Beschleunigung umfassen.

8. Verfahren nach einem der Ansprüche 1 bis 7, **dadurch gekennzeichnet, dass** die Wiederholungsrate für die Abstandsmessungen pro weiterem Objekt (20, 22, 24) nicht unter eine minimale Wiederholungsrate der Abstandsmessungen pro weiterem Objekt (20, 22, 24), insbesondere entsprechend einem Messabstand von 2 Sekunden, abgesenkt wird und/oder nicht über eine maximale Wiederholungsrate hinaus, insbesondere entsprechend einem Messabstand von 0,2 Sekunden, erhöht wird.

9. Verfahren nach einem der Ansprüche 1 bis 7, **dadurch gekennzeichnet, dass** eine geringe Wiederholungsrate eingestellt oder eine Wiederholungsrate verringert wird, wenn ein Objektzustand eine gleichförmige Bewegung ergibt und/oder ein Objektzustand anzeigt, dass die Distanz zu dem Objekt (20, 22, 24) sich vergrößert.

10. Verfahren nach einem der Ansprüche 1 bis 9, **dadurch gekennzeichnet, dass** eine hohe Wiederholungsrate eingestellt oder eine Wiederholungsrate erhöht wird, insbesondere eine vorbestimmte hohe Wiederholungsrate eingestellt wird, wenn wenigstens eine der folgenden Bedingungen erfüllt ist:
- die Messdaten entfernen sich von Vorhersagen des Modells, insbesondere über einen bestimmten Schwellwert hinaus;
- ein Objektzustand ergibt eine hohe Beschleunigung, die insbesondere oberhalb eines vordefinierten oder anpassbaren Schwellwerts liegt;
- ein Objektzustand ergibt, dass ein vordefinierter Warnbereich und/oder eine vordefinierte Zonengrenze (82, 84) angenähert und/oder erreicht wird;
- das Objekt (20, 22, 24) wird unregelmäßig erfasst;
- ein Objektzustand ergibt eine unregelmäßige Bewegung;
- eine Wahrscheinlichkeit, dass ein Objektzustand korrekt wiedergegeben wird, sinkt unter einen vordefinierten Schwellwert.

11. Verfahren nach Anspruch 10, **dadurch gekennzeichnet, dass** die Wiederholungsrate wieder abgesenkt wird, wenn die zuvor eingetretene Bedingung oder Bedingungen, die zur Erhöhung der Wiederholungsrate geführt hat oder haben, nicht mehr erfüllt ist oder sind.

12. Abstandsmesseinrichtung für ein Flurförderzeug, umfassend eine UWB-Sende- und -Empfangseinheit und eine Steuereinrichtung, die eingerichtet ist, wiederholt UWB-basierte Abstandsmessungen zu anderen UWB-fähigen Objekten (20, 22, 24), insbesondere Flurförderzeugen (20), durchzuführen und Wiederholungsraten der Abstandsmessungen gemäß einem Verfahren nach einem der Ansprüche 1 bis 11 anzupassen, wobei die Steuereinrichtung insbesondere in die Abstandsmesseinrichtung oder in eine Steuereinheit des Flurförderzeugs integriert ist.

13. Flurförderzeug (20) mit einer Abstandsmesseinrichtung gemäß Anspruch 12.

14. Steuerungs-Softwareprogramm mit Programmcodemitteln, die ausgebildet sind, bei Ausführung in der Steuereinrichtung (21) der Abstandsmesseinrichtung eines Flurförderzeugs (20) nach Anspruch 13 ein Verfahren nach einem der Ansprüche 1 bis 11 auszuführen.

15. Abstandsmesssystem mit wenigstens einem ersten Flurförderzeug (20) gemäß Anspruch 13 und einem oder mehreren UWB-fähigen weiteren Objekten (20, 22, 24).

## Claims

1. A method for adapting repetition rates of UWB-based distance measurements of a distance measuring device of a first industrial truck (20) from distance measuring devices of one or more further UWB-enabled objects (20, 22, 24), in particular of further industrial trucks (20), wherein UWB-based distance measurements with in each case variable repetition rates are performed in each case between the first industrial truck (20), on the one hand, and the further object (20, 22, 24) or, respectively the further objects (20, 22, 24), on the other hand, **characterized in that** results of the repeated distance measurements are fed to a predictive analysis algorithm (100) which executes and/or corrects estimates of one or more object states of the respective object (20, 22, 24) on the basis of the repeated distance measurements, wherein the respective repetition rate for the distance measurements for each of the one or more further objects (20, 22, 24) is individually adapted with the aid of predefined system parameters on the basis of the estimates of the object states.

2. The method according to Claim 1, **characterized in that** the analysis algorithm for each of the one or more further objects (20, 22, 24) creates a separate analysis instance.

3. The method according to Claim 1 or 2, **characterized in that** the predictive analysis algorithm is configured as a predictive filter (100), in particular as a Bayesian filter, in particular as a simple or extended Kalman filter, in particular with an associated linear or linearized model with movement equations.

4. The method according to Claim 1 or 2, **characterized in that** the predictive analysis algorithm is configured as an artificial intelligence model, in particular as a neural network, which is or will be trained with the aid of available distance measurement data.

5. The method according to Claim 4, **characterized in that** the artificial intelligence model makes a prediction of a time until a predefined distance threshold is reached and adapts the repetition rate depending on this time, in particular based on predefined thresholds.

6. The method according to Claim 4 or 5, **characterized in that** the artificial intelligence model is configured to be self-learning, wherein in particular an actual time until the predefined distance threshold is reached is measured and fed back to the model.

7. The method according to any one of Claims 1 to 6, **characterized in that** the one or more object states comprise(s) a distance, a speed and/or an acceleration.

8. The method according to any one of Claims 1 to 7, **characterized in that** the repetition rate for the distance measurements per further object (20, 22, 24) is not reduced below a minimum repetition rate of the distance measurements per further object (20, 22, 24), in particular corresponding to a measurement interval of 2 seconds, and/or is not increased over and above a maximum repetition rate, in particular corresponding to a measurement interval of 0.2 seconds.

9. The method according to any one of Claims 1 to 7, **characterized in that** a low repetition rate is set or a repetition rate is reduced when an object state reveals a uniform movement and/or an object state indicates that the distance from the object (20, 22, 24) is increasing.

10. The method according to any one of Claims 1 to 9, **characterized in that** a high repetition rate is adjusted or a repetition rate is increased, in particular a predetermined high repetition rate is set when at least one of the following conditions is met:
- the measurement data depart from predictions of the model, in particular over and above a certain threshold;
- an object state reveals a high acceleration which is in particular above a predefined or adaptable threshold;
- an object state reveals that a predefined warning region and/or a predefined zone boundary (82, 84) is being approached and/or is reached;
- the object (20, 22, 24) is captured irregularly;
- an object state reveals an irregular movement;
- a probability that an object state is correctly reproduced falls below a predefined threshold.

11. The method according to Claim 10, **characterized in that** the repetition rate is reduced again when the condition or conditions which has or have previously occurred and which led to the increase in the repetition rate is or are no longer met

12. A distance measuring device for an industrial truck, comprising a UWB transmitting and receiving unit and a control device which is designed to repeatedly perform UWB-based distance measurements from other UWB-enabled objects (20, 22, 24), in particular industrial trucks (20), and to adapt repetition rates of the distance measurements according to a method according to any one of Claims 1 to 11, wherein the control device is in particular integrated into the distance measuring device or into a control unit of the industrial truck.

13. An industrial truck (20) with a distance measuring device according to Claim 12.

14. A control software program with program code instructions which are configured, when executed in the control device (21) of the distance measuring device of an industrial truck (20) according to Claim 13, to execute a method according to any one of Claims 1 to 11.

15. A distance measuring system having at least one first industrial truck (20) according to Claim 13 and one or more UWB-enabled further objects (20, 22, 24).

## Revendications

1. Procédé d'adaptation des fréquences de répétition de mesures de distance basées sur la technologie UWB effectuées par un dispositif de mesure de distance d'un premier chariot de manutention (20) à des dispositifs de mesure de distance d'un ou plusieurs autres objets compatibles UWB (20, 22, 24), en particulier d'autres chariots de manutention (20), dans lequel des mesures de distance basées sur la technologie UWB sont effectuées avec des fréquences de répétition variables entre le premier chariot de manutention (20), d'une part, et lesdits un ou plusieurs autres objets (20, 22, 24), d'autre part, **caractérisé en ce que** les résultats des mesures de distance répétées sont transmis à un algorithme (100) d'analyse prédictive, qui, sur la base des mesures de distance répétées, génère et/ou corrige des estimations d'un ou plusieurs états de l'objet concerné (20, 22, 24), la fréquence de répétition respective des mesures de distance étant adaptée individuellement pour chacun desdits un ou plusieurs autres objets (20, 22, 24) sur la base des estimations des états des objets, en utilisant des paramètres système prédéfinis.

2. Procédé selon la revendication 1, **caractérisé en ce que** l'algorithme d'analyse crée une instance d'analyse distincte pour chacun desdits un ou plusieurs autres objets (20, 22, 24).

3. Procédé selon la revendication 1 ou la revendication 2, **caractérisé en ce que** l'algorithme d'analyse prédictive est conçu sous la forme d'un filtre prédictif (100), en particulier d'un filtre de Bayes, en particulier d'un filtre de Kalman simple ou étendu, présentant notamment un modèle linéaire ou linéarisé associé à des équations de mouvement.

4. Procédé selon la revendication 1 ou la revendication 2, **caractérisé en ce que** l'algorithme d'analyse prédictive est conçu sous la forme d'un modèle d'intelligence artificielle, en particulier d'un réseau neuronal, qui est, ou qui a été, entraîné au moyen des données de mesure de distance disponibles.

5. Procédé selon la revendication 4, **caractérisé en ce que** le modèle d'intelligence artificielle établit une prédiction du temps nécessaire pour atteindre un seuil de distance prédéfini et adapte la fréquence de répétition en fonction de ce temps, notamment en fonction de valeurs seuils prédéfinies.

6. Procédé selon la revendication 4 ou la revendication 5, **caractérisé en ce que** le modèle d'intelligence artificielle est conçu pour être auto-apprenant, une durée réelle jusqu'à ce que le seuil de distance prédéfini soit atteint étant notamment mesurée et réinjectée dans le modèle.

7. Procédé selon l'une des revendications 1 à 6, **caractérisé en ce que** lesdits un ou plusieurs états d'objet comprennent une distance, une vitesse et/ou une accélération.

8. Procédé selon l'une des revendications 1 à 7, **caractérisé en ce que** la fréquence de répétition des mesures de distance pour chaque objet supplémentaire (20, 22, 24) n'est pas abaissée en dessous d'une fréquence minimale de répétition des mesures de distance par objet supplémentaire (20, 22, 24), notamment correspondant à un intervalle de mesure de 2 secondes, et/ou n'est pas augmentée au-delà d'une fréquence maximale de répétition, notamment correspondant à un intervalle de mesure de 0,2 seconde.

9. Procédé selon l'une des revendications 1 à 7, **caractérisé en ce qu'**une faible fréquence de répétition est réglée ou qu'une fréquence de répétition est réduite lorsqu'un état de l'objet indique un mouvement uniforme et/ou qu'un état de l'objet indique que la distance par rapport à l'objet (20, 22, 24) augmente.

10. Procédé selon l'une des revendications 1 à 9, **caractérisé en ce qu'**une fréquence de répétition élevée est réglée ou une fréquence de répétition est augmentée, en particulier **en ce qu'**une fréquence de répétition élevée prédéterminé est définie, lorsqu'au moins l'une des conditions suivantes est remplie :
- les données de mesure s'écartent des prévisions du modèle, notamment au-delà d'un certain seuil ;
- un état de l'objet entraîne une forte accélération, qui est notamment supérieure à un seuil prédéfini ou réglable ;
- un état de l'objet indique qu'une zone d'alerte prédéfinie et/ou une limite de zone prédéfinie (82, 84) est approchée et/ou atteinte ;
- l'objet (20, 22, 24) est détecté de manière irrégulière ;
- l'état d'un objet indique un mouvement irrégulier ;
- une probabilité qu'un état d'objet soit correctement reproduit tombe en dessous d'un seuil prédéfini.

11. Procédé selon la revendication 10, **caractérisé en ce que** la fréquence de répétition est à nouveau réduite lorsque la condition ou les conditions survenues précédemment, et ayant conduit à l'augmentation de la fréquence de répétition, n'est plus remplie ou ne sont plus remplies.

12. Dispositif de mesure de distance pour un chariot de manutention, comprenant une unité d'émission et de réception à technologie UWB et un dispositif de commande qui est agencé pour effectuer de manière répétée des mesures de distance basées sur la technologie UWB par rapport à d'autres objets compatibles UWB (20, 22, 24), en particulier des chariots de manutention (20), et pour adapter les fréquences de répétition des mesures de distance selon un procédé conforme à l'une des revendications 1 à 11, le dispositif de commande étant notamment intégré au dispositif de mesure de distance ou à une unité de commande du chariot de manutention.

13. Chariot de manutention (20) comprenant un dispositif de mesure de distance selon la revendication 12.

14. Programme logiciel de commande comprenant des moyens de code de programme qui sont conçus pour mettre en œuvre, lors de leur exécution dans le dispositif de commande (21) du dispositif de mesure de distance d'un chariot de manutention (20) selon la revendication 13, un procédé selon l'une des revendications 1 à 11.

15. Système de mesure de distance comprenant au moins un premier chariot de manutention (20) selon la revendication 13 et un ou plusieurs autres objets (20, 22, 24) compatibles UWB.
